# EUROPEAN PATENT SPECIFICATION

(11) **EP 1 594 243 B1**
(45) Date of publication and mention of the grant of the patent: **27.02.2008**
(21) Application number: 04291131.3
(22) Date of filing: 03.05.2004
(51) Int. Cl.: H04L 1/00

(54) **Transmission mode selection using quality estimation of a composite signal**
Übertragungsmodusselektion mittels Qualitätsschätzung eines zusammengesetzten Signals
Sélection de mode de transmission à l'aide d'estimation de la qualité d'un signal composite

(43) Date of publication of application: 09.11.2005
(73) Proprietor: Alcatel Lucent, 75008 Paris (FR)
(72) Inventor: Brignol, Luc, 75011 Paris (FR); Brouet, Jérôme, 75014 Paris (FR)
(74) Representative: Schmidt, Werner Karl

(56) References cited:
- EP-A- 1 255 369
- DE-A- 10 111 193
- KOUSA M A ET AL: "ADAPTIVE BINARY CODING FOR DIVERSITY COMMUNICATION SYSTEMS" IEEE INTERNATIONAL CONFERENCE ON PERSONAL WIRELESS COMMUNICATIONSPROCEEDINGS, XX, XX, 1997, pages 80-84, XP000992269

## Description

### Field of the invention.

The present invention generally relates to the field of communication systems and, more particularly but without limitation, to cellular mobile and broadband wireless communication systems that support multiple transmission modes.

### Background and prior art

Digital communication systems use a variety of linear and non-linear modulation schemes to communicate voice or data information. These modulation schemes include, Gaussian Minimum Shift Keying (GMSK), Quadrature Phase Shift Keying (QPSK), Quadrature Amplitude Modulation (QAM), etc. GMSK modulation scheme is a non-linear low level modulation (LLM) scheme with a symbol rate that supports a specified user bit rate. In order to increase user bit rate, high-level modulation (HLM) schemes can be used. Linear modulation schemes, such as QAM schemes, may have different level of modulation. For example, 16QAM scheme is used to represent the sixteen variation of 4 bits of data. On the other hand, a QPSK modulation scheme is used to represent the four variations of 2 bits of data. Although 16QAM scheme provides a higher bit rate than QPSK, both of these modulation schemes could have the same symbol rate. Application of modulation schemes, however, differ in many aspects, for example symbol rate and/or burst format, which complicates their support in systems that use multiple modulation schemes.

In wireless digital communication systems, standardized air interfaces specify most of system parameters, including modulation type, burst format, communication protocol, symbol rate, etc. For example, European Telecommunication Standard Institute (ETSI) has specified a Global System for Mobile Communications (GSM) standard that uses time division multiple access (TDMA) to communicate control, voice and data information over radio frequency (RF) physical channels or links using GMSK modulation scheme at a symbol rate of 271 ksps. In the U.S., Telecommunication Industry Association (TIA) has published a number of Standards that define various versions of digital advanced mobile phone service (D-AMPS), a TDMA system that uses a Differential QPSK (DQPSK) modulation scheme for communicating data over RF links. IEEE 802.11 a, b and g standards have defined different physical modes associated with modulation schemes (CCK, BPSK-OFDM, QPSK-OFDM, etc ..)

TDMA systems subdivide the available frequency band into one or several RF channels. The RF channels are divided into a number of physical channels corresponding to time slots in TDMA frames. Logical channels are formed from one or more physical channels, where modulation and channel coding schemes are specified. In these systems, the mobile stations communicate with a plurality of scattered base stations by transmitting and receiving bursts of digital information over uplink and downlink RF channels.

The growing number of mobile stations in use today has generated the need for more voice and data channels within cellular telecommunication systems. As a result, base stations have become more closely spaced, with an increase in interference between mobile stations operating on the same frequency in neighbouring or closely spaced cells. Although digital techniques gain more useful channels from a given frequency spectrum, there still remains a need to reduce interference, or more specifically to increase the ratio of the carrier signal strength to interference, (i.e., carrier-to-interference (C/I)) ratio. RF links that can handle lower C/I ratios are considered to be more robust than those that only can handle higher C/I ratios.

In order to provide various communication services, a corresponding minimum user bit rate is required. For example, for voice and/or data services, user bit rate corresponds to voice quality and/or data throughput, with a higher user bit rate producing better voice quality and/or higher data throughput. The total user bit rate is determined by a selected combination of techniques for speech coding, channel coding, modulation scheme, and for a TDMA system, the number of assignable time slots per call.

Depending on the modulation scheme used, link quality deteriorates more rapidly as C/I levels decrease. Higher level modulation schemes are more susceptible to low levels of C/I ratio than lower level modulation schemes. If a HLM scheme is used, the data throughput or grade of service drops very rapidly with a drop in link quality. On the other hand, if a LLM scheme is used, data throughput or grade of service does not drop as rapidly under the same interference conditions. Therefore, link adaptation methods, which provide the ability to change modulation and/or coding based on the channel conditions, are used to balance the user bit rate against link quality. Generally, these methods dynamically adapt a system's combination of speech coding, channel coding, modulation, and number of assignable time slots to achieve optimum performance over a broad range of C/I conditions.

In systems that support multiple modulation schemes, specially those which use different symbol rates, handling control information communicated over control channels creates many complications. By introduction of link adaptation algorithms, adaptation of coding and/or modulation scheme becomes more frequent. The frequent link adaptations result in an increased control signalling effort, if link adaptation commands are transmitted, for example, on Fast Associated Control Channels (FACCHs), causing degradation in communication quality.

Depending upon the radio channel conditions, a suitable combination with a sufficient robustness may be applied and an optimal user bit rate may be provided. Switching between different combinations of modulation and coding during transmission is called link adaptation and this feature is being considered for future radiocommunication systems and as an improvement for existing systems. An example of a communication system employing multiple modulation schemes is found in U.S. Pat. No. 5,577,087. Therein a technique for switching between a higher level QAM and QPSK is described. The decision to switch between modulation types is made based on quality measurements.

For example, General Packet Radio Service (GPRS), which is a GSM extension for providing packet data service, supports four channel coding schemes. A Convolutional Half-Rate Code scheme, CS1 coding scheme, which is the "mother" channel coding scheme of GPRS. The CS1 scheme is punctured to obtain approximately two-third rate and three-fourth rate code schemes, CS2 and CS3 coding schemes. GPRS also supports an uncoded scheme, known as CS4 coding scheme.

Enhanced GPRS (EGPRS) is an example for a system where both the coding scheme and the modulation is selected depending on channel conditions. EGPRS supports four coding schemes and in addition allows to select the modulation scheme, i.e. GMSK or 8 PSK. This results in a set of 9 modulation and coding schemes MCS1, MCS2, MCS3, MCS4, MCS5, MCS6, MCS7, MCS8 and MCS9.

EGPRS uses different modulation and coding schemes (MCSs) to transfer e.g. user downlink data. According to the GSM standard (05.08) the mobile access network shall select MCSs depending on link quality parameters:
mean bit error probability of a radio block (mean BEP) range : 0-31
coefficient of the variation of bit error probability of a radio block (cv BEP) range : 0-7

These link quality parameters are measured by the mobile terminals (MTs). One problem is to select the best downlink (DL) MCS for the individual connections to get the optimal/"maximum" data throughput.

The following table 1 provides the maximum throughput for EGPRS one could theoretically get.

**Table 1: MCS maximum throughput**

| | **modulation and coding scheme** | **maximum throughput (kbps)** |
|---|---|---|
| GMSK | MCS1 | 8,8 |
| | MCS2 | 11,2 |
| | MCS3 | 14,8 |
| | MCS4 | 17,6 |
| 8PSK | MCS5 | 22,4 |
| | MCS6 | 29,6 |
| | MCS7 | 44,8 |
| | MCS8 | 54,4 |
| | MCS9 | 59,2 |

When a communication link between a network component and a mobile terminal is established a link adaptation parameter, e.g. a modulation and coding scheme, needs to be selected. The problem is that this selection needs to be made without link quality parameters from the mobile terminal. A known solution for this problem is to select a default modulation and coding scheme, such as MCS4. By means of this default selection the communication link between the mobile terminal and the network component is established such that link quality parameters are transmitted from the mobile terminal to the network. By means of these link quality parameters the selection of the modulation and coding scheme can then be regulated depending on the actual link quality parameters.

IEEE 802.11 a,b and g standards allow the use of different modulation scheme (maned physical modes) for physical bit rates ranging from 1 Mb/s up to 54 Mb/s. By the way, the methods for choosing one or the other of the physical mode is out of the scope of the standards. In current implementation, this choice is very often based on packet error rates or detection of consecutive failure of packet transmissions.

The shortcoming of this prior art approach is that the default selection of the modulation and coding scheme can be too high in view of the actual reception conditions such that the initial quality of the communication link which is experienced by the user can be very low or even result in an interruption or failure to establish the communication link. On the other hand the default selection of the modulation and coding scheme maybe too low which results in an initial waste of bandwidth

EP 1 255 369 A1 shows a wireless communication system for transmitting information between a transmitter having more than one transmit antenna and a receiver having more than one receive-antenna, whereby information to be transmitted is divided into a plurality of sub-signals according to the number of used transmit-antennas. In the receiver the link quality of each sub-signal is determined and information of each sub-signal is transmitted to the receiver via a feedback channel. The transmitter properties of the sub-signals are controlled by the link quality information.

There is therefore a need for an improved communication system, such as a EGPRS, HSDPA for UMTS, WiFl, WiMAx, ...or other system, using multiple levels of modulation and coding.

### Summary of the invention

The present invention provides for a communication device for wireless data transmission, such as a base station for a wireless cellular communication network. The communication device supports at least first and second transmission modes. For example, a transmission mode is defined by a combination of a modulation scheme, a coding scheme and / or an air interface that is used for the transmission. For example in the case of a WiFi type system (www.wi-fi.org) there is only a single air interface but various transmission modes that are provided by various combinations of modulation and coding schemes.

The communication device periodically sends a composite signal. The composite signal has at least a first signal component using a first transmission mode and a second signal component using a second transmission mode. Typically the various signal components of the composite signal that use various transmission modes have different ranges such that a receiver may receive all, none or some of the signal components contained in the composite signal depending on the receiver's location and propagation environment. The receiver generates a coverage signal that is indicative of the reception condition of the composite signal experienced by the receiver. For example, the composite signal carries data that identifies those transmission modes in which signal components of the composite signal have been accurately received by the receiver. On this basis the communication device selects e.g. one of the transmission modes that is most suitable for a desired data transmission to the receiver or delay transmission until a predefined transmission mode is available or can transmit to the receiver which has the best MCS, or take an alternative action.

Alternatively the receiver itself performs the selection of one of the transmission modes. In this instance the coverage signal carries data that identifies the selected transmission modes. The communication device also selects the transmission mode as indicated by the coverage signal.

The present invention is particularily advantageous as it facilitates to select the most appropriate MCS for the transmission and also to get an information that triggers the transmission when a pre-defined MCS is reached. In particular, the invention provides a means to trigger a transfer with a predefined modulation and coding scheme via a beacon message. It is to be noted that the invention can be applied to any wireless system

For example, the invention can be implemented by a computer program product that comprises instructions for determining whether it is appropriate or not to transmit to the receiver with the selected transmission mode and to delay the transmission until a higher data rate transmission mode can be selected. When a desired transmission to the receiver requires a certain minimum amount of bandwidth the transmission is delayed until the high bandwidth transmission mode becomes available.

In accordance with a preferred embodiment of the invention a predefined pattern is transmitted from the communication device to the receiver by means of the signal components of the composite signal. For example the same predefined pattern is carried by all signal components. When the receiver receives the composite signal it determines which ones of the signal components of the composite signal are received accurately by comparing the received patterns with the predefined pattern the receiver has stored in non-volatile memory. Alternatively separate predefined patterns are used for each signal component corresponding to one of the transmission modes.

Preferably the receiver is a user terminal such as a mobile phone, a mobile computing device, such as a personal digital assistant, or the like, for usage in a telecommunication system. The present invention is particularly advantageous as no default selection of a transmission mode needs to be made as a starting point for the link adaptation. In contrast the present invention enables to perform an initial selection of the most suitable transmission mode for a given data transmission purpose on the basis of the composite signal that is periodically sent by e.g. the base stations of the telecommunication system.

This is particularly useful if the physical mode communication link is expected to have a short duration with a minimum of required message exchanges. Further, the present invention is particularly advantageous when receiving conditions change, such as during handover from one cell of the telecommunication network to another and / or when the receiver travels at a high speed. As the composite signal is transmitted periodically the current selection of the transmission mode can be re-evaluated and another selection can be performed if another selection mode becomes more appropriate due to a change of the reception conditions and / or to a change of the characteristics of the data stream to be transmitted, such as the required data rate. '

### Brief description of the drawings

In the following preferred embodiments of the invention will be described in greater detail, by way of example only, making reference to the drawings in which:
- Figure 1: is a block diagram of a telecommunication system having a base station and at least one user equipment,
- Figure 2: illustrates the different ranges for different transmission modes,
- Figure 3: illustrates the structure and periodic repetition of a beacon,
- Figure 4: shows a flow chart of a preferred embodiment of the method of the invention.

### Detailed description

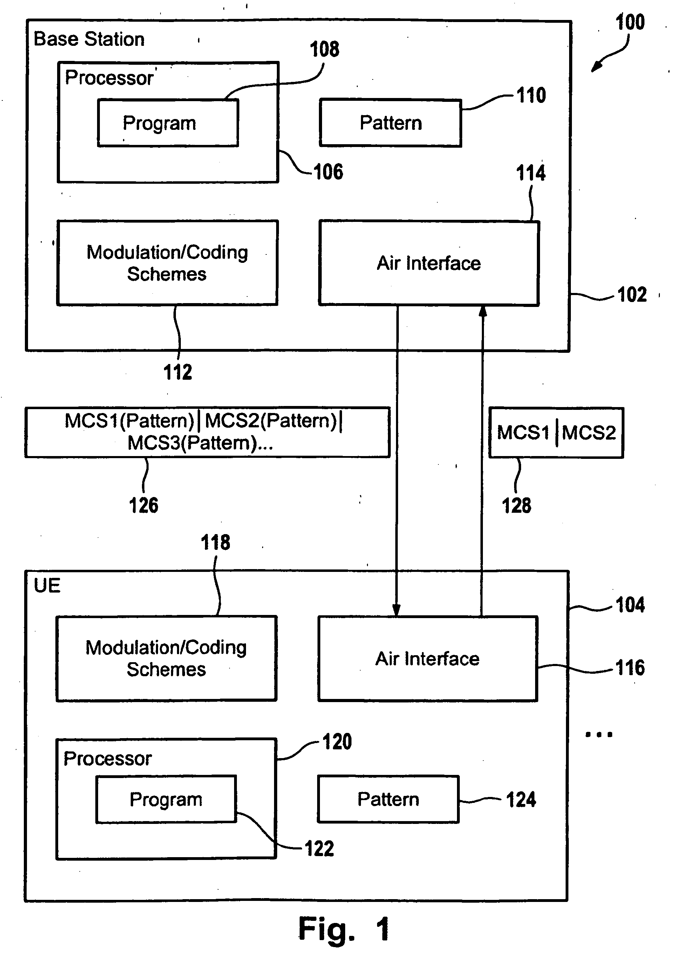

Figure 1 shows telecommunication system 100 that has base station 102 and a plurality of user equipments 104, only one of which is shown in figure 1 for ease of explanation. Base station 102 has processor 106 for execution of computer program 108 and storage 110 for storage of at least one predefined pattern.

Further, a base station 102 has modulator/demodulator 112 that supports multiple modulation and coding schemes such as MCS1, MCS2, MCS3, ...

MCSN corresponding to N different transmission modes. In the example considered here base station 102 has a single air interface 114 for wireless signal transmission within a given frequency band.

Alternatively base station 102 may have more than one air interface for transmission over multiple frequency bands using different transmission standards. In the latter case a transmission mode is given by a combination of a modulation and / or coding scheme and one of the air interfaces.

User equipment 104 has air interface 116 and modulator and demodulator 118 that implements the same transmission modes as modulator / demodulator 112 and air interface 114 of base station 102.

User equipment 104 has processor 120 for execution of computer program 122 and non-volatile storage 124 for storage of the at least 1 predefined pattern.

In operation, computer program 108 directs modulator/demodulator 112 to generate a composite signal 126 for transmission from air interface 114 to air interface 116. Composite signal 126 has one signal component per transmission mode and carries the same predefined pattern in each signal component. In the preferred embodiment considered here the first signal component is given by the predefined pattern stored in storage 110 that is modulated and encoded by means of MCS1. The second signal component of composite signal 126 is given by the same predefined pattern using MCS2 etc. Preferably composite signal 126 has a signal component for each one of the MCS1 to MCSN.

When user equipment 108 is within the range of all transmission modes provided by base station 102 it will correctly receive all signal components of composite signal 126. Otherwise user equipment 104 receives only a sub-set of the signal components which indicate that it is within the range of only the sub-set of the transmission modes.

When user equipment 108 receives composite signal 126 it makes an attempt to demodulate / decode all received signal components by means of modulator / demodulator 118. Computer program 122 makes a determination which ones of the signal components of composite signal 126 are received correctly by comparing the received patterns with the predefined pattern stored in storage 124. When a received pattern and the corresponding predefined pattern match or when the error is less than a predefined threshold, this indicates that the corresponding transmission mode is currently available for transmitting data between base station 102 and user equipment 104. Computer program 122 generates a corresponding coverage signal 128 that indicates which one of the transmission modes are currently available.

For example, if computer program 122 determines that only the signal component using MCS1 and the signal component using MCS2 are received correctly, coverage signal 128 indicates MCS1 and MCS2. Coverage signal 128 is transmitted from user equipment 104 to base station 102. On the basis of coverage signal 128 computer program 108 selects one of the available transmission modes, i.e. either MCS1 or MCS2 in the example considered here. For example, if a data stream is to be transmitted from base station 102 to user equipment 104 with 10kbps, computer program 108 will select the higher data rate transmission mode of the available transmission modes, i.e. MCS2, as the alternative transmission mode MCS1 has an insufficient data rate for the desired data transmission.

Alternatively the selection of the transmission mode is performed by user equipment 104. In this case coverage signal 128 does not indicate alternative transmission modes but only a single transmission mode in order to transmit user equipment's 104 selection of one of the transmission modes. This transmission mode selection as indicated in coverage signal 128 is then performed by computer program 108.

For example, base station 102 is a so-called info-station. When data is to be streamed from the info-station to the user equipment the streaming only starts when a high enough data rate becomes available.

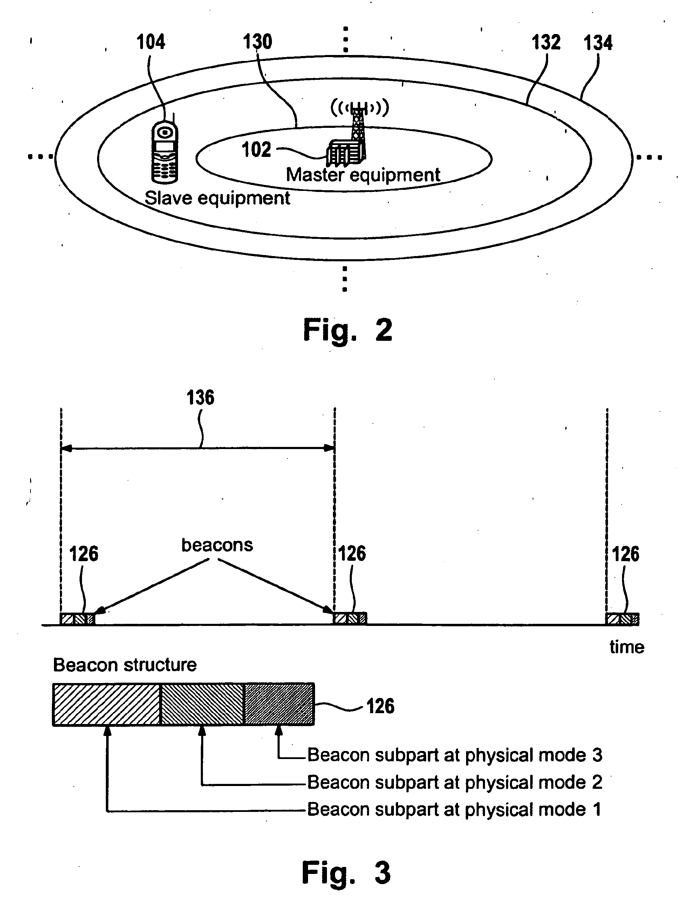

Figure 2 illustrates the various ranges of the transmission modes. In the preferred embodiment considered in figure 2, base station 102 takes the role of a 'master' as far as the selection of the transmission mode is concerned whereas user equipment 104 takes the role of a 'slave'. The highest data rate transmission mode, e.g. MCSN, has the smallest coverage zone 130 around base station 102. Coverage zone 132 is covered by MCS8 and coverage zone 134 by transmission mode MCS7, etc. At the position of user equipment 104 shown in figure 2 all transmission modes but the highest data rate transmission mode MCSN are available for data transmission between user equipment 104 and base station 102. Hence base station 102 can select one of the transmission modes MCS1 to MCS8 that is most appropriate for the desired data transmission to user equipment 104.

As illustrated in figure 3, composite signal 126 is sent out by base station 102 periodically (this is only a possibility, one might imagine that the composite signal sequence comes after a synchronisation pattern).. The time interval 136 between two consecutive transmissions of composite signal 126 is predefined and can be in the order of milliseconds. The periodicity of the composite signal 126 also determines the frequency with which transmission modes can be selected and de-selected by base station 102.

Figure 3 shows an embodiment of a structure of composite signal 126 that is also referred to as 'beacon'. In the preferred embodiment shown in figure 3 composite signal 126 has three signal components corresponding to three different physical transmission modes.

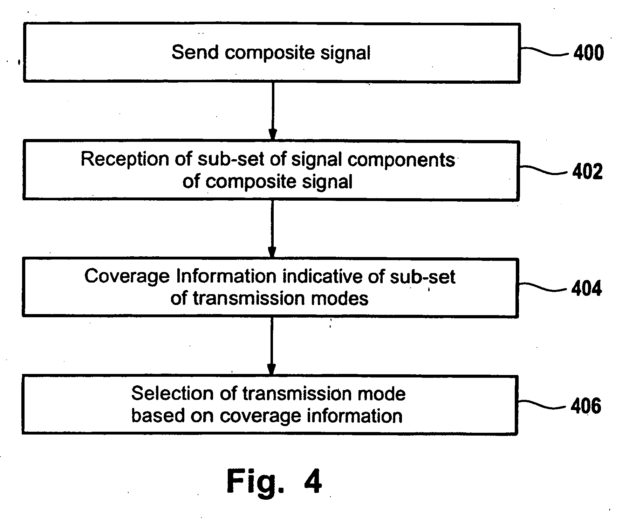

Figure 4 shows a flowchart illustrating an embodiment of a method of the invention. In step 400 a composite signal is sent out via an air interface. The composite signal has a signal component for each supported transmission mode. Each signal component carries the same or a different predefined pattern. In step 402 at least a sub-set of the signal components of the composite signal is received. Proper reception of the signal components is evaluated by comparing the respective received patterns with corresponding predefined patterns stored in non-volatile memory. As a consequence, coverage information that indicates which ones of the supported transmission modes are available is provided in step 404 and is used as a basis for selection of one of the available transmission modes in step 406.

### List of Reference Numerals

- 100: telecommunication system
- 102: base station
- 104: user equipment
- 106: processor
- 108: computer program
- 110: storage
- 112: modulator/demodulator
- 114: air interface
- 116: air interface
- 118: modulator/demodulator
- 120: processor
- 122: computer program
- 124: storage
- 126: composite signal
- 128: coverage signal
- 130: coverage zone
- 132: coverage zone
- 134: coverage zone
- 136: time interval

## Claims

1. A communication device for wireless data transmission comprising:
- means (106, 108, 112, 114) for sending data to a receiver (104), the means for sending data being adapted to periodically send a composite signal (126), the composite signal comprising at least a first signal component using a first transmission mode and a second signal component using a second transmission mode,
- means (106, 108, 112, 114) for receiving data from the receiver (104), the means for receiving being adapted to receive a coverage signal (128) being indicative of a receiver reception condition regarding the composite signal,
- means (108) for selecting one of the at least first and second transmission modes based on the coverage signal,
**characterized by**
- means (108) for determining whether to transmit to the receiver with the selected transmission mode based on bandwidth availability,
- means (108) for delaying the transmission until a higher data rate transmission mode can be selected.

2. The communication device of claim 1, the first and second transmission modes using respective first and second modulation and coding schemes.

3. The communication device of claim 1, the coverage signal being indicative of a sub-set of the at least first and second transmission modes that currently cover the receiver.

4. The communication device of claim 1, the composite signal carrying at least a pre-defined pattern (110).

5. A computer program product for selecting a transmission mode of at least first and second transmission modes, the computer program product comprising instructions for:
- periodically sending a composite signal (126) to a receiver (104), the composite signal comprising at least a first signal component using a first transmission mode and a second signal component using a second transmission mode,
- receiving a coverage signal (128) from the receiver, the coverage signal being indicative of a receiver reception condition regarding the composite signal,
- selecting one of the at least first and second transmission modes based on the coverage,information
**characterized by**
- determining whether to transmit to the receiver with the selected transmission mode based on bandwidth availability and to delay the transmission until a higher data rate transmission mode can be selected.

## Patentansprüche

1. Kommunikationsvorrichtung für die drahtlose Übertragung, die Folgendes umfasst:
- Mittel (106, 108, 112, 114) zum Senden von Daten an einen Empfänger (104), wobei die Mittel zum Senden von Daten so angepasst sind, dass sie regelmäßig ein zusammengesetztes Signal (126) senden, wobei das zusammengesetzte Signal mindestens eine erste Signalkomponente umfasst, die eine erste Sendebetriebsart verwendet, und eine zweite Signalkomponente, die eine zweite Sendebetriebsart verwendet;
- Mittel (106, 108, 112, 114) zum Empfangen von Daten vom Empfänger (104), wobei die Mittel zum Empfangen so angepasst sind, dass sie ein Versorgungssignal (128) empfangen, das die Empfangsbedingungen eines Empfängers hinsichtlich des zusammengesetzten Signals angibt;
- Mittel (108) zum Auswählen einer Sendebetriebsart aus mindestens einer ersten und einer zweiten Sendebetriebsart auf der Basis des Versorgungssignals;
**gekennzeichnet durch**
- Mittel (108) zum Bestimmen, ob eine Übertragung an den Empfänger mit der ausgewählten Sendebetriebsart auf der Basis der Verfügbarkeit der Bandbreite durchgeführt werden soll;
- Mittel (108) zum Verzögern der Übertragung, bis eine Betriebsart mit einer höheren Datenrate ausgewählt werden kann.

2. Kommunikationsvorrichtung gemäß Anspruch 1, wobei die erste und zweite Sendebetriebsart entsprechende erste und zweite Modulations- und Codierungsschemata verwenden.

3. Kommunikationsvorrichtung gemäß Anspruch 1, wobei das Versorgungssignal ein Teil-Set der mindestens ersten und zweiten Sendebetriebsart angibt, die momentan den Empfänger versorgen.

4. Kommunikationsvorrichtung gemäß Anspruch 1, wobei das zusammengesetzte Signal mindestens ein vordefiniertes Muster (110) umfasst.

5. Computerprogrammprodukt zum Auswählen einer Sendebetriebsart aus mindestens einer ersten und einer zweiten Sendebetriebsart, wobei das Computerprogrammprodukt mindestens Anleitungen zu folgenden Punkten umfasst:
- regelmäßiges Senden eines zusammengesetzten Signals (126) an einen Empfänger (104), wobei das zusammengesetzte Signal mindestens eine erste Signalkomponente umfasst, die eine erste Sendebetriebsart verwendet, und eine zweite Signalkomponente, die eine zweite Sendebetriebsart verwendet;
- Empfangen eines Versorgungssignals (128) vom Empfänger, wobei das Versorgungssignal eine Empfangsbedingung am Empfänger zu dem zusammengesetzten Signal angibt,
- Auswählen einer Sendebetriebsart aus mindestens einer ersten und einer zweiten Sendebetriebsart auf der Basis der Versorgungsinformationen,
**gekennzeichnet durch**
- das Bestimmen, ob eine Übertragung mit der ausgewählten Sendebetriebsart auf der Basis der Bandbreitenverfügbarkeit an den Empfänger durchgeführt werden soll, und das Verzögern der Übertragung, bis eine Sendebetriebsart mit einer höheren Datenrate ausgewählt werden kann.

## Revendications

1. Dispositif de communication pour une transmission de données sans fil, comprenant :
des moyens (106, 108, 112, 114) qui envoient des données à un récepteur (104), lesdits moyens d'envoi de données étant adaptés pour envoyer périodiquement un signal composite (126), le signal composite comprenant au moins un premier composant de signal utilisant un premier mode de transmission et un second composant de signal utilisant un second mode de transmission,
des moyens (106, 108, 112, 114) qui reçoivent des données en provenance du récepteur (104), les moyens de réception étant adaptés pour recevoir un signal de couverture (128) indicatif d'une condition de réception du récepteur en ce qui concerne le signal composite,
des moyens (108) qui sélectionnent l'un des au moins premier et second modes de transmission sur la base du signal de couverture,
**caractérisé par**
des moyens (108) qui décident d'effectuer ou non la transmission vers le récepteur avec le mode de transmission sélectionné sur la base de la disponibilité de la bande passante,
des moyens (108) qui retardent la transmission jusqu'à ce qu'un mode de transmission à débit de données plus élevé puisse être sélectionné,

2. Dispositif de communication selon la revendication 1, les premier et second modes de transmission utilisant des premier et second schémas de modulation et de codage respectifs.

3. Dispositif de communication selon la revendication 1, le signal de couverture étant indicatif d'un sous-ensemble des au moins premier et second modes de transmission qui couvrent présentement le récepteur.

4. Dispositif de communication selon la revendication 1, le signal composite transportant au moins un motif prédéfini (110).

5. Produit de programme informatique permettant de sélectionner un mode de transmission parmi au moins des premier et second modes de transmission, le produit de programme informatique comprenant des instructions pour :
envoyer périodiquement un signal composite (126) vers un récepteur (104), le signal composite comprenant au moins un premier composant de signal utilisant un premier mode de transmission et un second composant de signal utilisant un second mode de transmission,
recevoir un signal de couverture (128) en provenance du récepteur, le signal de couverture étant indicatif d'une condition de réception du récepteur en ce qui concerne le signal composite,
sélectionner l'un des au moins premier et second modes de transmission sur la base de l'information de couverture,
**caractérisé par**
la décision d'effectuer ou non la transmission vers le récepteur avec le mode de transmission sélectionné sur la base de la disponibilité de la bande passante et de retarder la transmission jusqu'à ce qu'un mode de transmission à débit de données plus élevé puisse être sélectionné.
